(19) Europäisches Patentamt
European Patent Office
Office européen des brevets

(11) **EP 0 875 082 B1**

(12) **EUROPÄISCHE PATENTSCHRIFT**

(45) Veröffentlichungstag und Bekanntmachung des Hinweises auf die Patenterteilung:
**06.10.1999 Patentblatt 1999/40**

(21) Anmeldenummer: **97904987.1**

(22) Anmeldetag: **08.01.1997**

(51) Int Cl.6: **H01R 13/44**, H02H 5/12

(86) Internationale Anmeldenummer:
**PCT/DE97/00016**

(87) Internationale Veröffentlichungsnummer:
**WO 97/26687 (24.07.1997 Gazette 1997/32)**

(54) **STECKDOSE**

SOCKET

PRISE DE COURANT

(84) Benannte Vertragsstaaten:
**AT CH DE FR GB IT LI**

(30) Priorität: **19.01.1996 DE 19601883**

(43) Veröffentlichungstag der Anmeldung:
**04.11.1998 Patentblatt 1998/45**

(73) Patentinhaber: **SIEMENS AKTIENGESELLSCHAFT**
**80333 München (DE)**

(72) Erfinder:
• **KLEEMEIER, Manfred**
**D-93073 Neutraubling (DE)**
• **SCHMID, Reinhard**
**D-93051 Regensburg (DE)**
• **SOLLEDER, Reinhard**
**D-93138 Lappersdorf (DE)**

(56) Entgegenhaltungen:
**EP-A- 0 305 856     WO-A-89/11747**
**DE-A- 3 836 275**

**Beschreibung**

Die Erfindung bezieht sich auf eine Steckdose, bei der nur bei vorgesehenem Verbraucher Spannung von der Versorgungsseite mittels einer Schalteinrichtung auf die Verbraucherseite durchgeschaltet wird. An den Steckbuchsen wird also nur dann Spannung freigegeben, wenn ein elektrischer Verbraucher angeschlossen wird. Derartige Lösungen lassen sich durch Bussysteme realisieren, die einen Schaltbefehl der Steckdose zuleiten (DE-U-9 312 528). Dadurch kann erreicht werden, daß die Steckdose in der Regel spannungsfrei ist, also daß Kleinkinder beim unabsichtlichen Berühren oder auch Erwachsene beim Tapezieren oder bei abgeschraubter Abdeckung nicht an spannungsführende Teile gelangen können. Hierbei weist eine spannungsversorgte Meßeinrichtung einen Gleichstromprüfkreis auf, der dafür ausgelegt ist, zu Meßzwecken einen Strom über eine anschließbare Last zu treiben, wobei der Gleichstromprüfkreis dafür ausgelegt ist, die Impedanz einer angeschlossenen Last mit einer hinsichtlich einer möglichen Gefährdungsspannung niedrigen Prüfspannung zu messen. Weiter weist die Einrichtung einen Wechselstromprüfkreis auf, der dafür ausgelegt ist, die Impedanz einer angeschlossenen Last mit einer zur Netzspannung vergleichsweise zumindest höheren Frequenz bei einer hinsichtlich einer möglichen Gefährdungsspannung niedrigen Prüfspannung zu messen. Ein derartiges Prüfverfahren ist für Steckdosen bekannt (DE-A-3 836 275).

Der Erfindung liegt die Aufgabe zugrunde, den Gedanken der spannungsfreien Steckdose unabhängig von äußeren zugeführten Schaltbefehlen weiter zu verbessern.

Die Lösung der geschilderten Aufgabe erfolgt durch eine Steckdose nach Patentanspruch 1. Hierbei weist eine spannungsversorgte Meßeinrichtung einen Gleichstromprüfkreis auf, der dafür ausgelegt ist, permanent einen Strom über eine anschließbare Last zu treiben, wobei der Gleichstromprüfkreis dafür ausgelegt ist, die Impedanz einer angeschlossenen Last mit einer hinsichtlich einer möglichen Gefahrdungsspannung niedrigen Prüfspannung zu messen. Weiter ist ein Wechselstrom der Meßeinrichtung vorgesehen, der dafür ausgelegt ist, mit einer zur Netzspannung vergleichsweise höheren oder hohen Frequenz bei einer hinsichtlich einer möglichen Gefahrdungsspannung niedrigen Prüfspannung zu messen. Eine Auswerteschaltung, insbesondere mit Mikroprozessor oder als sogenannte CPU, ist dafür ausgelegt, anhand vorgegebener Kriterien und von der Meßeinrichtung zugeführter Meßwerte zu entscheiden, ob Schaltkontakte der Schalteinrichtung zu schließen sind. Wesentlich ist hierbei, daß ein Gleichstromprüfkreis und ein Wechselstromprüfkreis vorgesehen sind und daß die Auswerteschaltung dafür ausgelegt ist, bei einer Impedanz 1 von mehr als 500 Ohm, gemessen mittels des Gleichstromprüfkreises, in logischer Undverbindung mit der Beziehung

$$1,3 \leq \frac{\text{Impedanz1}}{\text{Impedanz2}} \leq 15,$$

wobei die Impedanz 2 mittels des Wechselstromprüfkreises bestimmt ist, nicht durchzuschalten. Der verbotene Bereich, bei dem nicht durchzuschalten ist, entspricht dem durch einen Menschen gegebenen Kriterien. Die Kriterien können an andere Lebewesen angepaßt werden.

Eine derartige Steckdose bietet auch dann Schutz vor Gefährdung, wenn ein angeschlossener Fehlerstromschutzschalter nicht ansprechen kann, da der gesamte Strom zwischen den überwachten Leitern hin- und zurückfließt. Eine derartige Situation könnte beispielsweise dann eintreten, wenn ein Kind gegen Erde isoliert die Steckbuchse für den Außenleiter und für den Rückleiter durch eingesteckte Nägel berührte.

Bisher hat man derartige Gefährdungen durch sogenannte Shutter zu vermeiden gesucht, wobei mechanische Mittel die Steckbuchsen verschlossen halten, solange nicht in die Anschlußöffnungen gleichzeitig Kontaktmittel eingeführt werden, wie es durch einen Stecker und seine Steckkontaktstifte erfolgt. Die hier vorgeschlagene Steckdose ist jedoch sicherer als derartige Shutter, die unter ungünstigen Umständen bei gewissen Ausführungen überlistet werden können. Für die Vorgabe geeignete Kriterien kann man der Literatur, beispielsweise dem Buch von Gottfried Bieglmeier "Wirkungen des elektrischen Stromes auf Menschen und Nutztiere" entnehmen.

In der Praxis ist es vorteilhaft, wenn der Gleichstromprüfkreis der Meßeinrichtung mit einer Spannung in der Größenordnung von 5 Volt arbeitet. Für den Wechselspannungsprüfkreis der Meßeinrichtung ist es günstig, eine Frequenz in der Größenordnung von 10 KHz und eine Meßspannung von 5 Volt zu wählen, um die Impedanz nach einer bestimmten Zeit zu ermitteln. Bei einer bekannten Sicherheitseinrichtung, die zwischen einem Versorger und eine zu schützende Last einzuschalten ist (WO 89/11747) wird mit Prüfspannungen von 5 und 9 Volt bei einer Impedanzmessung gearbeitet, um ein Lebewesen anstelle eines Abschlußwiderstandes zu schützen.

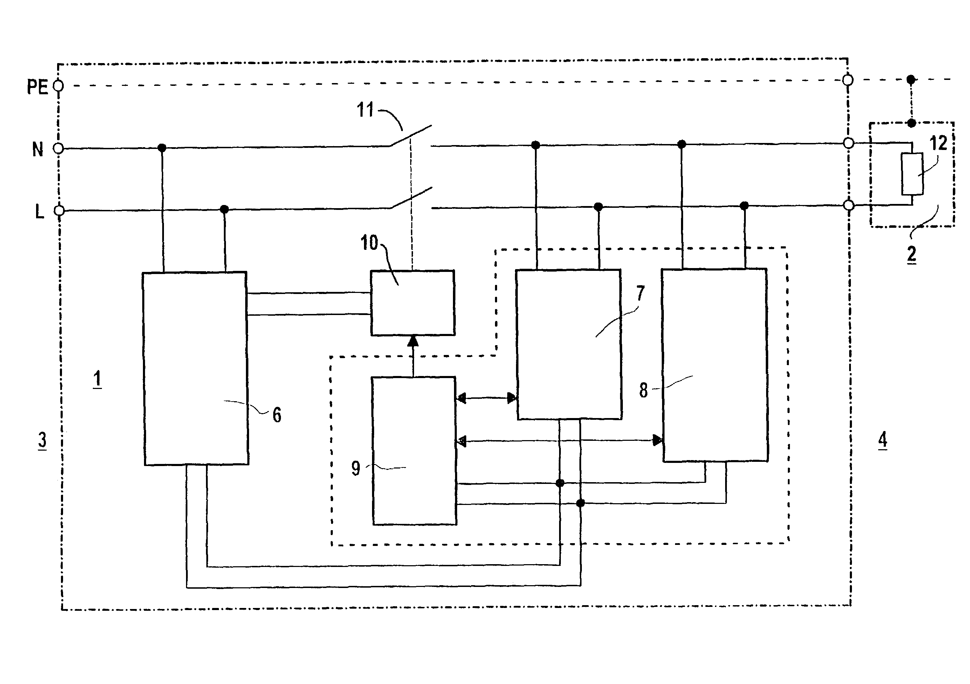

Die Erfindung soll nun anhand eines in der Zeichnung grob schematisch wiedergegebenen Ausführungsbeispiels näher erläutert werden:

In der Zeichnung ist eine Steckdose 1 veranschaulicht, an die ein Verbraucher 2 angeschlossen ist. Auf der Versorgungsseite können übliche Schraubanschlüsse oder auch schraubenlose Anschlüsse vorgesehen sein und auf der Verbraucherseite 4 Steckbuchsen 4 für Steckerstifte. Verständlicherweise ist unter Steckdose hier auch jede andere Art von Steckverbindung zu verstehen, die eine sinngemäße Sicherung anzuschließender Elemente gewährleistet.

Eine Meßeinrichtung 5 ist durch ein Netzteil 6 mit Spannung versorgt. Die Meßeinrichtung 5 weist einen Gleichstromprüfkreis 7 und einen Wechselstromprüfkreis 8 auf. Der Gleichstromprüfkreis 7 und der Wechselstromprüfkreis 8 arbeiten mit einer Auswerteschaltung 9 zusammen. Die Auswerteschaltung 9 kann auf der Basis eines Mikroprozessors oder allgemein als Datenverarbeitungseinrichtung mit einer CPU ausgeführt sein. Wenn die Auswerteschaltung 9 aufgrund der Meßwerte des Gleichstromprüfkreises 7 und des Wechselstromprüfkreises 8 im Vergleich zu vorgegebenen Kriterien die Sicherheitsbedingungen erfüllt sieht, wird ein Aktor 10 beaufschlagt, der eine Schalteinrichtung 11 leitend steuert, also durchschaltet. Die Steckdose 1 hat auf der Versorgungsseite 3 Anschlüsse für einen Außenleiter L, für einen Neutralleiter N und für einen Schutzleiter PE. Auf der Verbraucherseite 4 ist in der Zeichnung ein Verbraucher 2 angeschlossen, dessen Ersatzschaltbild durch einen Widerstand 12 veranschaulicht ist. Das Netzteil 6 liefert die Bordnetzspannung für den Aktor 10, für die Auswerteschaltung 9, den Gleichstromprüfkreis 7 und den Wechselstromprüfkreis 8.

Der Gleichstromprüfkreis 7 versucht permanent, einen Strom über eine Last 2 bzw. dessen Ersatzwiderstand 12 zu treiben. Bei angeschlossener Last kann ein Gleichstrom fließen und gemessen werden. Vor dem Schließen der Schaltkontakte der Schalteinrichtung 11 wird durch die Meßeinrichtung 5 ermittelt, ob es sich um einen elektrischen Verbraucher mit entsprechenden Kriterien handelt. Wird beispielsweise die Impedanz des Widerstands 12 durch den Gleichstromprüfkreis 7 bei einer Meßspannung von 5 Volt gemessen und beispielsweise ein Meßwert nach ca. 100 ms ausgewertet und anschließend die Impedanz zwei des Widerstands 12 durch den Wechselstromprüfkreis 8 bei 10 KHz bei einer Meßspannung von 5 Volt gemessen und nach ca. 100 ms ausgewertet, erfolgt keine Durchschaltung, wenn folgende Bedingungen erfüllt sind:

Die Impedanz eins, gemessen durch den Gleichstromprüfkrei 7, ist größer als 500 Ohm, also Impedanz 1 > 500 $\Omega$; in logischer Undverbindung mit $1,3 \leq \frac{Impedanz1}{Impedanz2} \leq 15$. Die Erfüllung beider Bedingungen definiert den verbotenen Bereich, der den Kriterien entspricht, wie sie bei Menschen gegeben sind. Außerhalb des verbotenen Bereichs erfolgt die Durchschaltung. Die Kriterien lassen sich so wählen, daß sich unterschiedliche Körpergrößen, beispielsweise von Kindern und Erwachsenen, berücksichtigen lassen, daß trockene und nasse Haut je nach Anwendungsbereichen berücksichtigt werden kann. Entsprechende minimale und maximale Werte für die Impedanz lassen sich vorgeben. Die Meßpunkte mit Gleichspannung und mit Wechselspannung durch den Gleichstromprüfkreis und durch den Wechselstromprüfkreis lassen sich so wählen, daß die Stromverträglichkeit eines zu schützenden Organismus berücksichtigt ist bei Gleichstrom und bei 10 KHz, Zum Schutz von Personen sollte mit Prüfströmen deutlich unterhalb der Loslaßgrenze gearbeitet werden.

**Patentansprüche**

1. Steckdose (1), bei der nur bei vorgesehenem Verbraucher (2) Spannung von der Versorgungsseite (3) mittels einer Schalteinrichtung (11) auf die Verbraucherseite (4) durchgeschaltet wird,

 - wozu eine spannungsversorgte Meßeinrichtung (5) einen Gleichstromprüfkreis (7) aufweist, der dafür ausgelegt ist, zu Meßzwecken einen Strom über eine anschließbare Last (2) zu treiben, wobei der Gleichstromprüfkreis (7) dafür ausgelegt ist, die Impedanz einer angeschlossenen Last mit einer hinsichtlich einer möglichen Gefährdungsspannung niedrigen Prüfspannung zu messen,
 - und wozu ein Wechselstromprüfkreis (8) der Meßeinrichtung (5) dafür ausgelegt ist, die Impedanz einer angeschlossenen Last mit einer zur Netzspannung vergleichsweise zumindest höheren Frequenz bei einer hinsichtlich einer möglichen Gefährdungsspannung niedrigen Prüfspannung zu messen,

 **dadurch gekennzeichnet,**
 daß ein Gleichstromprüfkreis und ein Wechselstromprüfkreis vorgesehen sind und eine Auswerteschaltung (9) dafür ausgelegt ist, bei einer Impedanz 1, gemessen durch den Gleichstromprüfkreis (7), der Beziehung zu genügen

$$Impedanz\ 1 > 500\ \Omega$$

 in Undverbindung mit der Beziehung mit der Impedanz 2, gemessen durch den Wechselstromprüfkreis (8), der Beziehung zu genügen

$$1,3 \leq \frac{Impedanz1}{Impedanz2} \leq 15,$$

 nicht durchzuschalten und so anhand vorgegebener Kriterien und anhand von Meßwerten in einem logischen Entscheidungsprozeß zu entscheiden, ob Schaltkontakte der Schalteinrichtung (11) zu schließen sind.

2. Steckdose nach Anspruch 1,
 **dadurch gekennzeichnet,**
 daß der Gleichstromprüfkreis (7) der Meßeinrichtung (5) mit einer Spannung in der Größenordnung von 5 Volt arbeitet.

3. Steckdose nach Anspruch 1 oder 2,
 **dadurch gekennzeichnet,**
 daß der Wechselstromprüfkreis (8) der Meßeinrichtung (5) mit einer Frequenz in der Größenordnung von 10 kHz und einer Meßspannung in der Größenordnung von 5 Volt arbeitet und dafür ausgelegt ist, die Impedanz innerhalb einer bestimmten Zeit zu ermitteln.

## Claims

1. Plug socket (1) in which a switching device (11) switches voltage from the supply side (3) through to the load side (4) only when a load (2) is provided,

    - for which purpose a measuring device (5), supplied with voltage, has a direct current test circuit (7) which is designed to drive a current via a connectable load (2) for measurement purposes, the direct current test circuit (7) being designed to measure the impedance of a connected load at a test voltage which is less than a potentially dangerous voltage,
    - and for which purpose an alternating current test circuit (8) of the measuring device (5) is designed to measure the impedance of a connected load at a frequency which is at least higher than that of the mains voltage and at a test voltage less than a potentially dangerous voltage, characterized in that a direct current test circuit and an alternating current test circuit are provided and an evaluation circuit (9) is designed not to make a through connection for an impedance 1, measured by the direct current test circuit (7) to satisfy the relationship

$$\text{impedance } 1 > 500 \ \Omega$$

    in an AND operation with the relationship with the impedance 2, measured by the alternating current test circuit (8), to satisfy the relationship

$$1.3 \leq \frac{\text{Impedance 1}}{\text{Impedance 2}} \leq 5$$

    and thus to decide on the basis of predetermined criteria and measured values in a logic decision process whether switch contacts of the switching device (11) are to be closed.

2. Plug socket according to Claim 1, characterized in that the direct current test circuit (7) of the measuring device (5) operates at a voltage of the order of 5 volts.

3. Plug socket according to Claim 1 or 2, characterized in that the alternating current test circuit (8) of the measuring device (5) operates at a frequency of the order of 10 kHz and a measurement voltage of the order of 5 volts and is designed to determine the impedance within a specific time.

## Revendications

1. Prise de courant (1) dans laquelle une tension provenant du côté alimentation (3) n'est connectée au moyen d'un dispositif de commutation (11) sur le côté consommateur (4) que pour un consommateur prévu (2),

    - un dispositif de mesure (5) alimenté en tension comportant un circuit de test en courant continu (7), qui est conçu pour faire passer un courant dans une charge raccordable (2) à des fins de mesure, le circuit de test en courant continu (7) étant conçu pour mesurer l'impédance d'une charge raccordée avec une tension de test réduite par rapport à une tension à risque possible,
    - un circuit de test en courant alternatif (8) du dispositif de mesure (5) étant conçu pour mesurer l'impédance d'une charge raccordée avec une fréquence au moins plus grande que la tension de réseau et avec une tension de test réduite par rapport à une tension à risque possible,

    caractérisé par le fait que
    il est prévu un circuit de test en courant continu et un circuit de test en courant alternatif, et un circuit d'évaluation (9) est conçu pour ne pas connecter en présence d'une impédance '1', mesurée au moyen du circuit de test en courant continu (7), qui satisfait à la relation

$$\text{Impédance1} > 500 \ \Omega$$

    en combinaison ET logique avec l'impédance '2', mesurée par le circuit de test en courant alternatif (8), qui satisfait à la relation

$$1.3 \leq \frac{\text{Impédance1}}{\text{Impédance2}} \leq 5$$

    et pour décider ainsi dans un processus de décision logique à l'aide de critères prescrits et à l'aide de valeurs mesurées si des contacts de commutation du dispositif de commutation (11) sont à fermer ou non.

2. Prise de courant selon la revendication 1, caractérisé par le fait que le circuit de test en courant continu (7) du dispositif de mesure (5) travaille avec une tension de l'ordre de 5 V.

3. Prise de courant selon la revendication 1 ou 2, caractérisé par le fait que le circuit de test en courant alternatif (8) du dispositif de mesure (5) travaille avec une fréquence de l'ordre de 10 kHz et avec une tension de mesure de l'ordre de 5 V et qu'il est conçu pour déterminer l'impédance en un temps déterminé.